Europäisches Patentamt

European Patent Office

Office européen des brevets

(19)

(11) **EP 0 746 924 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **95938575.8**

(22) Anmeldetag: **15.12.1995**

(51) Int Cl.⁷: $H04L\ 1/00$, $G10L\ 19/00$

(86) Internationale Anmeldenummer:
**PCT/IB95/01134**

(87) Internationale Veröffentlichungsnummer:
**WO 96/020546 (04.07.1996 Gazette 1996/30)**

(54) **DIGITALES ÜBERTRAGUNGSSYSTEM MIT VERBESSERTEM DECODER IM EMPFÄNGER**

DIGITAL TRANSMISSION SYSTEM WITH AN IMPROVED DECODER IN THE RECEIVER

SYSTEME DE TRANSMISSION NUMERIQUE AVEC DECODEUR AMELIORE DANS LE RECEPTEUR

(84) Benannte Vertragsstaaten:
**DE FR GB**

(30) Priorität: **24.12.1994 DE 4446558**

(43) Veröffentlichungstag der Anmeldung:
**11.12.1996 Patentblatt 1996/50**

(73) Patentinhaber:
• **Koninklijke Philips Electronics N.V.**
**5621 BA Eindhoven (NL)**
• **Philips Corporate Intellectual Property GmbH**
**20099 Hamburg (DE)**
Benannte Vertragsstaaten:
**DE**

(72) Erfinder:
• **HOFMANN, Rudolf**
**D-91301 Forchheim (DE)**
• **BROX, Wolfgang**
**D-90562 Kalchreuth (DE)**

(74) Vertreter: **Volmer, Georg, Dipl.-Ing. et al**
**Philips Corporate Intellectual Property GmbH,**
**Postfach 50 04 42**
**52088 Aachen (DE)**

(56) Entgegenhaltungen:
**US-A- 5 193 140       US-A- 5 307 441**
**US-A- 5 307 460**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein digitales Übertragungssystem, insbesondere Mobilfunksystem mit mindestens einem Sender zum Senden von Codeworten, die aus einem Digitalsignal ableitbar sind, und mit mindestens einem Empfänger zum Empfang von zu empfangenden Codeworten, wobei der Empfänger einen Dekoder mit einem von einem Eingangssignal angeregten Prädiktionsfilter zur Ermittlung eines geschätzten Digitalsignals aufweist.

Die Erfindung betrifft weiter eine Funkeinrichtung, insbesondere eine Fest- oder Mobilstation für ein derartiges digitales Übertragungssystem sowie einen Empfänger für ein derartiges Übertragungssystem.

Ein derartiges digitales Übertragungssystem arbeitet beispielsweise nach dem sogenannten LD-CELP-Sprachcodieralgorithmus (= Low-Delay Code-excited Linear Predictiv Coder), wie dies beispielsweise in EP 379 296 A2 beschrieben ist. Dabei wird auf der Sendeseite in einem Encoder ein analoges Sprachsignal digitalisiert. Dieses Digitalsignal wird anschließend im Sender mit Hilfe eines Encoders sowie eines Decoders in Codeworte umgesetzt. Diese Codeworte werden vom Sender über einen übertragungskanal, beispielsweise bei einem Mobilfunkübertragungssystem die Luftschnittstelle zum Empfänger übertragen. Im Empfänger werden die Codeworte mittels des Decoders in ein geschätztes Digitalsignal umgewandelt und einer Nachverarbeitung unterzogen. Der Decoder im Sender und der Decoder im Empfänger sind dabei identisch aufgebaut und werden im störungsfreien Fall auch von denselben Codeworten versorgt, so daß sie im Idealfall identisch Digitalsignale als Ausgangssignale produzieren, d.h. daß das digitalisierte Sprachsignal auf der Sendeseite dem geschätzten Digitalsignal auf der Empfangsseite entspricht. Werden jedoch auf dem Übertragungskanal die zu übertragenden Codeworte gestört, bei einem Mobilfunkübertragungssystem beispielsweise durch von Hochhäusern hervorgerufene Funkschatten, so wird der Decoder des Empfängers mit anderen Codeworten versorgt, die nicht den gesendeten Codeworten entsprechen. Hierdurch kommt es zu Störungen, die auch subjektiv wahrnehmbar sind.

Der Erfindung liegt die Aufgabe zugrunde, die Qualität des geschätzten Digitalsignals bei Störungen des Übertragungskanals zu verbessern.

Diese Aufgabe wird dadurch gelöst, daß der Decoder erste Schaltmittel zum Abschalten des Eingangssignals des Prädiktionsfilters beim Empfang eines gestörten Codewortes und zweite Schaltmittel zur Zuschaltung von aus zeitlich zurückliegenden Werten des geschätzten Digitalsignals gebildeten Ersatzwerten für das geschätzte Digitalsignal bei abgeschaltetem Eingangssignal aufweist.

Die Erfindung geht dabei von der Erkenntnis aus, daß im Störungsfall, d.h. beim Empfang eines gestörten Codewortes, insbesondere bei Bündelfehlern (= bei mehreren aufeinanderfolgenden gestörten Codeworten) die fehlerhafte Rekonstruktion des geschätzten Digitalsignals im Decoder des Empfängers unterbrochen werden muß, damit die subjektiv wahrnehmbare Sprachqualität im Empfänger relativ unverändert bleibt. Gleichzeitig ist es neben dem Abschalten des Eingangssignals des Prädiktionsfilters im Decoder des Empfängers weiter nötig, daß für das geschätzte Digitalsignal Ersatzwerte zur Verfügung gestellt werden. Überraschenderweise hat es sich gezeigt, daß die subjektiv wahrnehmbare Sprachqualität bei auftretenden Störungen, d.h. bei gestörten Codeworten dann relativ unverändert empfunden wird, wenn die neuesten Abtastwerte des Synthesefilters durch bereits ermittelte Abtastwerte des geschätzten Digitalsignals aus der Vergangenheit ersetzt werden. Die Durchführung dessen kann durch Extrapolation im Prädiktionsfilter folgen.

Bei der Übertragung von Sprachsignalen ist eine Verbesserung der subjektiv wahrzunehmenden Sprachqualität besonders dann festzustellen, wenn als Ersatzwerte ähnliche Abtastwerte des geschätzten Digitalsignals vorgesehen sind.

Eine sehr gute Sprachqualität und eine geringe Signalverzögerung kann dadurch sichergestellt werden, daß das Übertragungssystem zur Übertragung von Codeworten nach dem LD-CELP-Verfahren (Low-Delay Code-excited Linear Predictive) vorgesehen ist.

Eine Nachverarbeitung des geschätzten Digitalsignals kann auf vorteilhafte Weise dadurch erfolgen, daß der Empfänger ein dem Decoder nachgeschaltetes Postfilter aufweist.

Das geschätzte Digitalsignal kann in vorteilhafter Weise dadurch rekosnstruiert werden, daß das Prädiktionsfilter als adaptives Synthesefilter ausgebildet ist und daß als Eingangssignal des Synthesefilters ein Anregungssignal vorgesehen ist, wobei zur Gewinnung des Anregungssignals eine Speichereinrichtung zur Speicherung von Vergleichscodeworten vorgesehen ist.

Der benötigte Speicherplatz der Speichereinrichtung kann dadurch in Grenzen gehalten werden, daß die Speichereinrichtung aus einer ersten Speichereinheit zur Speicherung eines vorgebbaren Vorrats von Vektoren von Abtastwerten und einer zweiten Speichereinheit zur Speicherung von Gewichtungsfaktoren gebildet wird.

Eine wirksame Steuerung der Schaltmittel kann dadurch sichergestellt werden, daß der Empfänger eine Fehlererkennungseinrichtung zur Detektion gestörter Codeworte und zur Ansteuerung der ersten und zweiten Schaltmittel aufweist.

Eine praktische Realisierung der Ermittlung ähnlicher Ersatzwerte aus der Vergangenheit kann dadurch erfolgen, daß zur Gewinnung der Ersatzwerte ein die zeiliche Verschiebung kennzeichnender Verzögerungsparameter sowie ein Gewichtungsfaktor vorgesehen ist.

Zusätzlicher Aufwand zur Speicherung weiterer zeitlich zurückliegenfder Werte sowie der Aufwand für weitere Rechenzeit zur Ermittlung eines optimalen Verzögerungsparameters wird dadurch vermieden, daß zur Ableitung des Verzögerungsparameters und des Gewichtungsfaktors vom Postfilter ermittelte Werte vorgesehen sind. So stellt beispielsweise im LD-CELP nach ITU-T Rec. G.728 das Postfilter sowohl den Verzögerungsparameter, einen Gewichtungsfaktor sowie auch einen erweiterten Zustandsspeicher zur Verfügung.

Eine weitere Qualitätsverbesserung insbesondere zu Beginn von harmonischen Signalabschnitten kann dadurch erreicht werden, daß das aktuelle Sprachspektrum zur Wichtung des im Ausgangssignal des Postfilters entstehenden Fehlerspektrums vorgesehen ist.

Im folgenden wird die Erfindung anhand der in den Figuren dargestellten Ausführungsbeipiele näher erläutert.

Es zeigen:

Fig. 1    ein Ausführungsbeispiel eines Funkübertragungssystems mit einer Basisstation und einer Mobilstation,

Fig. 2    ein Ausführungsbeispiel für ein Übertragungssystem mit einem Sender und einem Empfänger,

Fig. 3    ein Ausführungsbeispiel für einen im Sender vorgesehenen Decoder,

Fig. 4    ein Ausführungsbeispiel für einen im Empfänger vorgesehenen Decoder und

Fig. 5    ein Ausführungsbeispiel für ein im Decoder vorgesehenes Prädiktionsfilter.

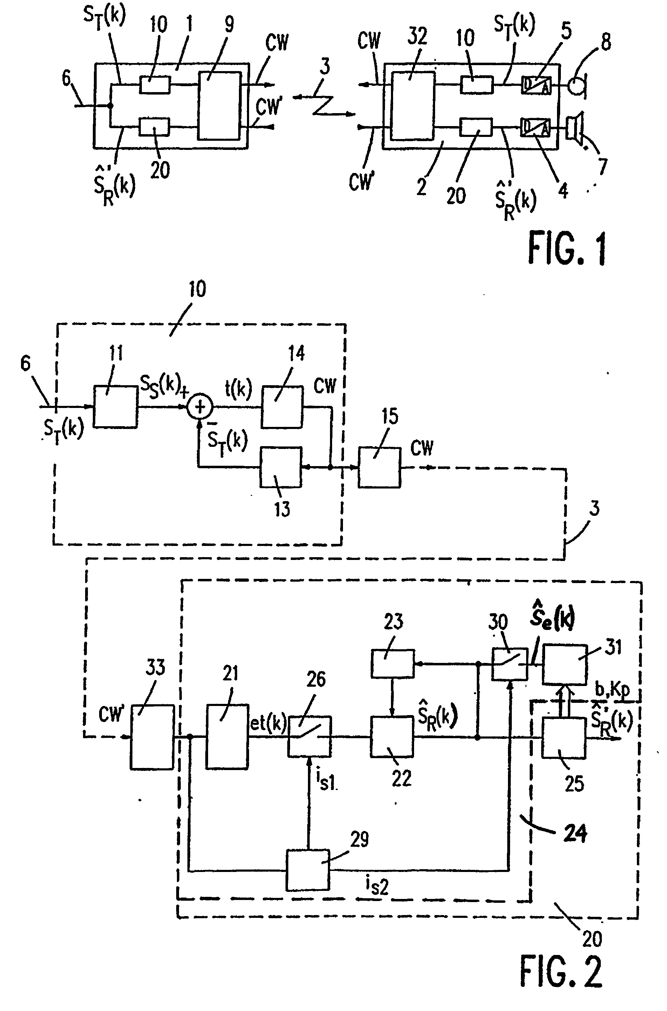

Fig. 1 zeigt als Blockschaltbild ein Ausführungsbeispiel eines Funkübertragungssystems mit einer Basisstation 1 und einer Mobilstation 2. Über einen Übertragungskanal 3, d.h. die Luftschnittstelle werden Codeworte CW von einem Sender 10 der Basisstation 1 zu einem Empfänger 20 der Mobilstation 2 übertragen und als Codeworte CW' vom Empfänger 20 der Mobilstation empfangen. Der Empfänger 20 der Mobilstation 2 bildet aus den empfangenen Codeworten CW' ein rekonstruiertes Digitalsignal s'(k), das nach Digital-Analog-Wandlung an einen Lautsprecher weitergeleitet wird. In umgekehrter Übertragungsrichtung werden von einem Mikrofon 8 empfangene Sprachsignale mittels eines Digital-Analog-Wandlers 5 digitalisiert und nach Umwandlung des Digitalsignals in Codeworte CW mittels eines in der Mobilstation 2 angeordneten Senders 10 über den Übertragungskanal 3 zur Basisstation 1 übertragen. Diese werden als Codeworte CW' im Empfänger 20 der Basisstation 1 empfangen und in ein rekonstruiertes Digitalsignal s'(k) umgesetzt. Dieses wird über eine Verbindungsleitung 6 beispielsweise in digitaler Form zu Vermittlungseinrichtungen des öffentlichen Telefonnetzes übertragen.

Fig. 2 zeigt ein Blockschaltbild eines Ausführungsbeispiels für ein Übertragungssystem mit einem Sender 10 und einem Empfänger 20, wie diese beispielsweise bei dem in Fig. 1 dargestellten Mobilfunkübertragungssystem in Basisund Mobilstation zum Einsatz kommen. Der Empfänger 10 wird bei dem in Fig. 2 dargestellten Ausführungsbeispiel aus einer Segmentiereinrichtung 11, der ein Digitalsignal s(k) beispielsweise über eine Verbindungsleitung 6 des öffentlichen Telefonnetzes zugeführt wird. Weiter ist im Sender 10 ein Encoder 14 sowie ein Decoder 13 vorgesehen. Ein am Ausgang des Encoders 14 anliegendes Signal, das aus zu übertragenden Codeworten CW gebildet wird, versorgt ebenfalls den Decoder 13. Der Decoder 13 bildet aus den Codeworten CW ein Signal $s_0(k)$, daß mit Hilfe eines Addierers 12 vom Ausgangssignal $s_s(k)$ am Ausgang der Segmentiereinrichtung 11 substrahiert wird. Am Ausgang des Addierers 12 liegt ein im folgenden als Zielvektor t(k) bezeichnetes Differenzsignal.

Die über den Übertragungskanal 3 empfangenen Codeworte CW' werden im Empfänger 20 einem Decoder 24 zugeführt, der aus den empfangenen Codeworten CW' ein geschätztes Digitalsignal s' (k), d.h. ein approximiertes Abbild des im Sender vorhandenen Digitalsignals s(k) bildet. Im Empfänger 20 ist weiter ein Postfilter 27 vorgesehen, der das geschätzte Digitalsignal s' (k) in ein Ausgangssignal s' (k) des Postfilters 25 umsetzt. Der Decoder 24 des Empfängers 20 besteht aus einer Speichereinrichtung 21, aus ersten Schaltmitteln 26, aus einem Prädiktionsfilter 22, aus einer Adaptionseinrichtung 23, aus einer zweiten Schalteinrichtung 30, aus einer Anpassungseinrichtung 31 sowie einer Fehlererkennungseinrichtung 29. Die Anregungseinrichtung 21 liefert bei geschlossener erster Schalteinrichtung 26 ein Anregungssignal et(k) für das Prädiktonsfilter 22. Das Prädiktionstilter 22 rekonstruiert aus dem Anregungssignal et(k) ein geschätztes Digitalsignal s' (k), wobei über die Adaptionseinrichtung 23 eine Koeffizientenadaption des Prädiktionsfilters 22 vorgesehen ist. Bei geöffneten ersten Schaltmitteln 26 und geschlossenem zweiten Schaltmittel 30 wird das Postfilter 25 nicht mit dem Ausgangssignal s' (k) des Prädiktionsfilters 22 versorgt, sondern von Ersatzwerten $s'_e$ (k), die aus zeitlich zurückliegenden Werten des geschätzten Digitalsignals s' (k) gebildet sind. Hierzu wird der Extrapolationseinrichtung 31 aus dem Postfilter 25 ein Verzögerungsparameter kp, ein Gewichtungsfaktor b sowie die jeweils benötigten Zustandsgrößen s' zur Verfügung gestellt.

Das in Fig. 2 dargestellte digitale Funkübertragngssystem arbeitet mit dem Sprachcodieralgorithmus LD-CELP (Low-Delay Code-excited-Linear-Predictiv-Coder). Dieses Verfahren wurde im Mai 1992 als ITU-T (früher CCITT) Standard G.728 verabschiedet. Dieser Codieralgorithmus ist jedoch relativ rechenintensiv und wegen des relativ hohen Leistungs- und Speicherverbrauchs nur für wenige Anwendungsbereich, wie beispielsweise im Videobereich von Interesse. Eine aufwandsgünstigere Version wurde als Anhang zu G.728 bei ITU-T vorgesehen. Diese aufwandsgünstigere Version ist auch für Mobilfunkübertragungssysteme interessant, obwohl der Aufwand beispielsweise gegenüber dem beim GSM Codec verwendeten RPE-LTP Codec immer noch wesentlich höher ist. Der Vorteil des LD-CELP ist jedoch die sehr gute Sprachqualität und die geringe Signalverzögerung. Mit Hilfe der Erfindung wird es möglich, den LD-CELP Codec und dessen Vorteile auf die speziellen Probleme bei der Übertragung über einen Übertragungskanal eines Mobilfunksystems anzupassen und die Vorteile dieses Codex voll auszunutzen. Auf der Sendeseite sind hierzu im Empfänger 10 keinerlei Änderungen notwendig. So besteht der Sender 10 entsprechend dem LD-CELP- Grundprinzip der Segmentiereinrichtung 11, die das Digitalsignal s(k) beispielsweise aus fünf Abtastwerten bestehendes segmentiertes Digitalsignal $s_{s(k)}$ umsetzt. Mit Hilfe des nachfolgenden Coders 14 und Decoders 13 wird das segmentierte Digitalsignal $s_{s(k)}$, das beispielsweise eine Bitrate von 64 kbit/s aufweist, in ein Codewortsignal CW mit beispielsweise einer Bitrate von 16 kbit/s umgewandelt. Die Sendeeinrichtung 15 sendet das so codierte Codewortsignal CW über den Übertragungskanal 3 an den Empfänger 20. Bis auf Codier- und Übertragungsfehler stimmt das vom Empfänger 20 empfangene Codewortsignal CW' mit dem gesendeten Codewortsignal CW überein.

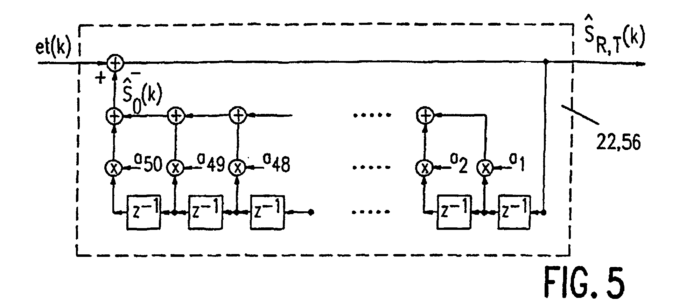

Der Decoder 24 des Empfängers 20 decodiert das empfangen Codewortsignal CW' ebenfalls mit Hilfe eines adaptiven Prädiktionsfilters 22. Als Ergebnis liegt am Ausgang des Decoders 24 das geschätzte Digitalsignal $s^{\wedge}(k)$. Zur Rekonstruktion dieses Signals $s^{\wedge}(k)$ wird beispielsweise ein adaptives Prädiktionsfilter vom Grade 50 = Synthesefilter (vergleiche Figur 5) verwendet. Die Filterkoeffizienten für das Prädiktionsfilter 22 werden mit Hilfe der Adaptionseinrichtung 23 aus dem rekonstruierten Signal $s^{\wedge}(k)$ abgeleitet. Das Anregungssignal et(k) des Synthesefilters 22 wird aus einem Vektor $y_{is(k)}$ von fünf Abtastwerten gewonnen, der aus einem fest gespeicherten Vorrat von beispielsweise 128 Vektoren, die in der Speichereinrichtung 21 gespeichert sind, ausgelesen. Weiterhin ist zur Gewinnung der Anregung et(k) ein Gewichtungsfaktor vorgesehen. Eine ausführliche Beschreibung der funktionsweise eines derartigen adaptiven Prädiktionsfilters ist beispielsweise in "lineare Prädiktion", Markel und Grey, Linear prediction of speech, Springer Verlag, Berlin 1976, enthalten. Das vom Prädiktionsfilter 22 gebildete rekonstruierte Digitalsignal $s^{\wedge}(k)$ wird im Postfilter 25 nochmals einer Nachverarbeitung unterzogen. Die bisherige Funktionsweise des Decoders 24 betrifft den Fall, daß der Schalter 26 geschlossen und der Schalter 30 geöffnet ist. In diesem Fall wird von der Fehlererkennungseinrichtung 29 an die ersten Schaltmittel 26 und zweiten Schaltmittel 30 ein entsprechendes Steuersignal geliefert. In diesem Betriebszustand liegt keine Störung der empfangenen Codeworte CW' vor.

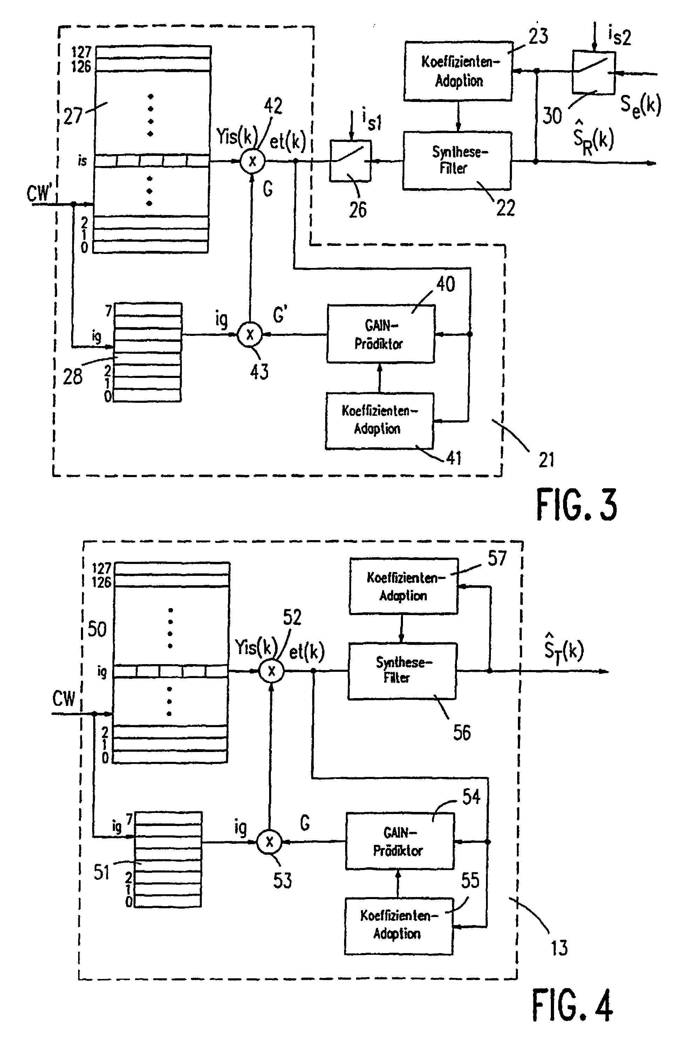

Kommt es jedoch, wie dies beispielsweise bei einem Mobilfunksystem in Folge eines durchfahrenen Funkschattens häufig der Fall ist, zu einer Störung der empfangenen Codeworte CW', so würde bei der oben beschriebenen Betriebsweise des Decoders (erstes Schaltmittel 26 geschlossen, zweites Schaltmittel 30 geöffnet) der Decoder 24 des Empfängers 20 mit einem anderen Parameter CW' der empfangenen Codeworte gefüttert, als der Decoder 13 des Senders 10. Infolgedessen würden auch die Filterkoeffizienten der beiden Prädiktionsfilter im Sender 10 und im Empfänger 20 anders nachgeführt, so daß die Zustandsgrößen der beiden Decoder 13, 24 divergieren würden. Obwohl über verlustfaktoren sichergestellt wird, daß innerhalb von ca. 300 msec die Zustandgrößen wieder konvergieren wäre der Störeinfluß durch gestörte Codeworte CW' im Empfänger 20 subjektiv wahrnehmbar. Mit Hilfe der ersten 26 und zweiten 30 Schaltmittel sowie der Ersatzsignalerzeugungseinrichtung 31 wird erreicht, daß bei einem aufgetreten Übertragungsfehler die Zustandgrößen des Prädiktionsfilters des Decoders 24 des Empfängers 20 möglichst den entsprechenden Größen im Sender 10 nachgeführt werden, so daß die subjektiv wahrnehmbare Störung weitestgehend minimiert wird. Für die Ansteuerung der ersten 26 und zweiten 30 Schaltmittel ist es lediglich erforderlich, daß der Übertragungskanal 3 Redundanz zur Verfügung stellt, so daß auf der Empfangsseite ein gestörtes Codewort CW' auch als gestört erkannt wird. Hierzu können bekannte Methoden zur Kanalcodierung verwendet werden, die unabhängig vom Gegenstand der vorliegenden Erfindung sind. Im folgenden wird lediglich vorausgesetzt, daß die Fehlererkennungseinrichtung 29 in der Lage ist zu erkennen, ob ein gestörtes Codewort CW' empfangen wurde. Der Erfindung liegt daher die Erkenntnis zu Grunde, daß, sobald im Empfänger auf ungestörte Codeworte CW' ein gestörtes Codewort CW' folgt, das resultierende Ausgangssignal des Prädiktionsfilters $s^{\wedge}_{R(k)}$ um so mehr dem im Sender 10 produzierten Signal $s^{\wedge}_{T(k)}$ gleichen wird, je weniger sich die Zustandsgrößen sowie die Filterkoeffizienten des Prädiktionsfilters sowie des in der Speichereinrichtung 21 vorgesehenen Verstärkungsprädiktors (vergleiche Figur 3) beider Decoderteile unterscheiden werden. Es muß dafür gesorgt werden, daß die Filterkoeffizienten des Prädiktionsfilters 22 nach Empfang eines gestörten Codewortes CW' möglichst wenig von den entsprechenden Werten des Decoders 13 im Sender 10 abweichen. Da die Filterkoeffzienten aber von den Zustandsgrößen abgeleitet werden, muß daher in erster Linie versucht werden, geeignete Zustandsgrößen $s^{\wedge}_{R(k)}$ auch bei gestörten Codeworten CW' dem Prädiktionsfilter 22 zur Verfügung zu stellen. Überraschender Weise hat es sich gezeigt, daß durch die Zuschaltung von aus zeitlich zurückliegenden Werten des geschätzten Digitalsignals $s^{\wedge}_{R(k)}$ dieser Anforderung Rechnung getragen werden kann. Bei dem in Fig. 2 dargestellten digitalen Übertragungssystem werden daher im Empfänger 20 beim Empfang eines gestörten Codewortes CW' die neuesten fünf Abtastwerte des Prädiktionsfilters 22 nicht durch Einspeisung eines dann fehlerbehafteten Signals et(k) ermittelt, sondern durch sehr ähnliche Abtastwerte $s^{\wedge}_{e(k)}$ aus der Vergangenheit von $s^{\wedge}_{R(k)}$

ersetzt. Erreicht wird dies im Decoder 24 des Empfängers 20 dadurch, daß der Schalter des ersten Schaltmittels 26 geöffnet wird und der Schalter des zweiten Schaltmittels 30 geschlossen wird. In diesem Fall stehen am Ausgang des Prädiktionsfilters 22 von der Ersatzwerteerzeugungseinrichtung 31 erzeugte Ersatzwerte $s^{\wedge}_{e(k)}$, die beispielsweise nach folgender Vorschrift ermittelt werden:

$$s^{\wedge}_{e(k)} = b \times s^{\wedge}_{R(k-kp)}$$

wobei kp einen Verzögerungsparameter und b einen Gewichtungsfaktor kennzeichnet. Dieses bestmögliche Signal $s^{\wedge}_{e(k)}$ kann beispielsweise nach einem allgemein bekannten Verfahren zur Minimierung des Fehlers nach folgender Vorschrift:

$$E = \sum_{i=1}^{L} [\hat{s}(k-i) - b \times \hat{s}(k-i-\kappa)]^2,$$

wobei L die Mittelungslänge ist und $\kappa$ üblicher Weise einen Wert von mindestens 16 annimmt, ermittelt werden.

Bei dem in Fig. 2 dargestellten Ausführungsbeispiel ist im Empfänger 20 nach dem Decoder 24 das Postfilter 25 eingeschaltet. Bei einer derartigen Ausführungsform des Empfängers kann eine Erweiterung des Zustandsspeichers zur Speicherung der zeitlich zurückliegenden Werte sowie die Rechenzeit zur Ermittlung des optimalen Verschiebungsparameters kp entfallen, denn im LD-CELP nach ITU-T Rec. G.728 ist bereits ein Postfilter eingeschaltet, das sowohl den Verzögerungsparameter kp als auch einen Gewichtungsfaktor b in Recom. G.728 als ptap bezeichnet, als auch einen erweiternden Zustandsspeicher (in Rec. G.728 als Feld ST (240)) zur Verfügung gestellt wird. Es wird in diesem Fall allerdings empfohlen, den Gewichtungsfaktor b nicht direkt durch ptap zu ersetzen, sondern durch $\gamma \times$ ptap, wobei $\gamma < 1$ gewähl wird. Ansonsten bestünde die Gefahr, daß bei längeranhaltender Störung ein nicht mehr abklingendes harmonisches Signal erzeugt wird, da ptap im Postfilter den Wert 1.0 annehmen kann.

Die praktische Durchführung der Zuschaltung von aus zeitlich zurückliegenden Werten des geschätzten Digitalsignals $s^{\wedge}_{R(k)}$ gebildeten Ersatzwerten $s^{\wedge}_{e(k)}$ kann durch Extrapolation im Prädiktionsfilter 22 erfolgen. Das Grundprinzip des erfindungsgemäßen Decoders 24 besteht zusammenfassend darin, daß im Falle eines gestörten Codewortes CW', den aktuellen Vektor aus $s^{\wedge}_{R(K)}$ mit dem aktuellen Spektrum durch einen um kp verzögerten Vektor aus dem (ungestörten) Restsignal zu ersetzen.

Dieses Verfahren zur Extrapolation des Signals $s^{\wedge}(k)$ bei als fehlerhaft empfangenen erkannten Codeworten CW' liefert bereits gute Ergebnisse, jedoch läßt sich die Qualität weiter verbessern wenn insbesondere zu Beginn von harmonischen Signalabschnitten das entstehende Fehlerspektrum mit dem gerade aktuellen Sprachspektrum gewichtet wird. Ein bekanntes Verfahren hierzu ist beispielsweise:

$$A(z) = 1 - P(z) = 1 + \Sigma a_i \times z^{-i}$$

eine derartige Filterung des Sprachabschnitts mit dem inversen Frequenzgang liefert dann das so genannte Restsignal, d.h. den Fehler zwischen dem tatsächlichen und dem prädiktierten Sprachsignal. Dieses Restsignal hat in der Praxis zumindest näherungsweise ein Spektrum. Die Filterung des Restsignals mit 1/A(z) liefert schließlich wieder das ursprüngliche Sprachsignal. Fehler, die vorher dem Restsignal zugeführt wurden, werden mit der spektralen Einhüllenden des Sprachssignals gewichtet und damit für das menschliche Ohr verdeckt. Zusammenfassend besteht diese weitere Verbesserung darin, daß im Falle eines gestörten Codewortes CW' der aktuelle Vektor aus $s^{\wedge}_{R(k)}$ mit dem aktuellen Spektrum durch einen um kp verzögerten Vektor aus dem Restsignal ersetzt wird.

Simulationen haben gezeigt, daß bei Störungen von etwa 3 % aller übertragenen Codeworte CW' die Qualität des Rekonstruierbaren Signal $s^{\wedge}_{R(k)}$ kaum vom ungestörten Fall unterschieden werden kann.

**Patentansprüche**

1. Digitales Übertragungssystem, insbesondere Mobilfunksystem, mit mindestens einem Sender (10) zum Senden von Codeworten (CW), die aus einem Digitalsignal (s(k)) ableitbar sind, und mit mindestens einem Empfänger (20) zum Empfang von zu empfangenden Codeworten (CW'), wobei der Empfänger (20) einen Dekoder (24) mit einem von einem Eingangssignal (et(k)) angeregten Prädiktionsfilter (22) zur Ermittlung eines geschätzten Digi-

talsignals ($\overset{\wedge}{s}_R$(k)) aufweist,

**dadurch gekennzeichnet,**

**dass** der Dekoder (24) erste Schaltmittel (26) zum Abschalten des Eingangssignals (et(k)) des Prädiktionsfilters (22) beim Empfang eines gestörten Codewortes (CW') und zweite Schaltmittel (31) zur Zuschaltung von aus zeitlich zurückliegenden Werten des geschätzten Digitalsignals ($\overset{\wedge}{s}_R$(k)) gebildeten Ersatzwerten ($\overset{\wedge}{s}_e$(k)) für das geschätzte Digitalsignal ($\overset{\wedge}{s}_R$(k)) bei abgeschaltetem Eingangssignal (et(k)) aufweist.

2. Übertragungssystem nach Anspruch 1,
   **dadurch gekennzeichnet,**
   **daß** das Übertragungssystem zur Übertragung von Codeworten (CW) nach dem LD-CELP-Verfahren (Low-Delay Code-excited Linear Predictive) vorgesehen ist.

3. Übertragungssystem nach einem der Ansprüche 1 bis 2,
   **dadurch gekennzeichnet,**
   **daß** der Empfänger ein dem Decoder (24) nachgeschaltetes Postfilter (25) aufweist.

4. Übertragungssystem nach einem der Ansprüche 1 bis 3,
   **dadurch gekennzeichnet,**
   **daß** das Prädiktionsfilter (22) als adaptives Synthesefilter ausgebildet ist und daß als Eingangssignal (et(k)) des Synthesefilters (22) ein Anregungssignal vorgesehen ist, wobei zur Gewinnung des Anregungssignals (et(k)) eine Speichereinrichtung (21) zur Speicherung von Vergleichscodeworten vorgesehen ist.

5. Übertragungssystem nach einem der Ansprüche 1 bis 4,
   **dadurch gekennzeichnet,**
   **daß** die Speichereinrichtung (21) aus einer ersten Speichereinheit (27) zur Speicherung eines vorgebbaren Vorrats von Vektoren ($y_{is}$(k)) von Abtastwerten und einer zweiten Speichereinheit (28) zur Speicherung von Gewichtungsfaktoren (ig) gebildet wird.

6. Übertragungssystem nach einem der Ansprüche 1 bis 5,
   **dadurch gekennzeichnet,**
   **daß** der Empfänger (20) eine Fehlererkennungseinrichtung (29) zur Detektion gestörter Codeworte (CW') und zur Ansteuerung der ersten (26) und zweiten (30) Schaltmittel aufweist.

7. Übertragungssystem nach einem der Ansprüche 1 bis 6,
   **dadurch gekennzeichnet,**
   **daß** zur Gewinnung der Ersatzwerte ($\overset{\wedge}{s}_e$(k) ein die zeiliche Verschiebung kennzeichnender Verzögerungsparameter (kp) sowie ein Gewichtungsfaktor (b) vorgesehen ist.

8. Übertragungssystem nach einem der Ansprüche 1 bis 7,
   **dadurch gekennzeichnet,**
   **daß** der Empfänger ein dem Decoder (24) nachgeschaltetes Postfilter (25) nach ITU-T Rec. G.728 aufweist und daß zur Ableitung des Verzögerungsparameters (kp) und des Gewichtungsfaktors (b) vom Postfilter (25) ermittelte Werte vorgesehen sind.

9. Übertragungssystem nach einem der Ansprüche 1 bis 8,
   **dadurch gekennzeichnet,**
   **daß** das aktuelle Sprachspektrum zur Wichtung des im Ausgangssignal ($\overset{\wedge}{s}'$ (k)) des Postfilters (25) entstehenden Fehlerspektrums vorgesehen ist.

10. Funkeinrichtung (1,2), insbesondere Fest- oder Mobilstation für ein digitales Übertragungssystem, insbesondere ein Mobilfunkübertragungssystem, mit einem Empfänger (20) zum Empfang von übertragenen Codeworten (CW'), die aus einem Digitalsignal (s(k)) abgeleitet sind, wobei der Empfänger (20) einen Dekoder (24) mit einem Prädiktionsfilter (22) zur Ermittlung eines geschätzten Digitalsignals (s(k)) aufweist,
    **dadurch gekennzeichnet,**
    **dass** der Dekoder (24) Schaltmittel (26) aufweist, die zum Abschalten eines Eingangssignals (et(k)) des Prädiktionsfilters (22) beim Empfang eines gestörten Codewortes (CW') vorgesehen sind, und dass bei abgeschaltetem Eingangssignal (et(k)) des Prädiktionsfilters (22) für das geschätzte Digitalsignal Ersatzwerte ($s_e$(k)) zeitlich zurückliegende Werte des geschätzten Digitalsignals (s(k)) vorgesehen sind.

**11.** Empfänger (20) für ein digitales Übertragungssystem, insbesondere Mobilfunksystem, zum Empfang von übertragenen Codeworten (CW'), die aus einem Digitalsignal (s(k)) abgeleitet sind, wobei der Empfänger (20) einen Dekoder (24) mit einem Prädiktionsfilter (22) zur Ermittlung eines geschätzten Digitalsignals (s(k)) aufweist, __dadurch gekennzeichnet.__
**dass** der Dekoder (24) Schaltmittel (26) aufweist, die zum Abschalten eines Eingangssignals (et(k)) des Prädiktionsfilters (22) beim Empfang eines gestörten Codewortes (CW') vorgesehen sind, und dass bei abgeschaltetem Eingangssignal (et(k)) des Prädiktionsfilters (22) für das geschätzte Digitalsignal Ersatzwerte ($s_e$(k)) zeitlich zurückliegende Werte des geschätzten Digitalsignals (s(k)) vorgesehen sind.

## Claims

**1.** A digital transmission system, more particularly a mobile radio system comprising at least a transmitter (10) for transmitting codewords (CW) which can be derived from a digital signal (s(k)), and at least a receiver (20) for receiving codewords (CW'), the receiver (20) including a decoder (24) with a prediction filter (22) which is excited by an input signal (et(k)) to produce an estimated digital signal $s_R$(k),
**characterized in that** the decoder (24) comprises first switching means (26) for switching off the input signal (et(k)) of the prediction filter (22) when a disturbed codeword (CW') is received and second switching means (31) for switching substitute values $s_e$(k) formed from previous values of the estimated digital signal $s_R$(k) instead of the estimated digital signal $s_R$(k) when the input signal (et(k) is switched off.

**2.** A transmission system as claimed in Claim 1, **characterized in that** the transmission system for transmitting codewords (CW) operates according to the LD-CELP (Low-Delay Code Excited Linear Prediction) method.

**3.** A transmission system as claimed in one of the Claims 1 to 2, **characterized in that** the receiver comprises a postfilter (25) inserted downstream of the decoder (24).

**4.** A transmission system as claimed in one of the Claims 1 to 3, **characterized in that** the prediction filter (22) is arranged as an adaptive synthesis filter and **in that** an excitation signal is used as an input signal (et(k)) of the synthesis filter (22), a memory circuit (21) for storing comparison codewords being arranged for producing the excitation signal (et(k)).

**5.** A transmission system as claimed in one of the Claims 1 to 4, **characterized in that** the memory circuit (21) is formed by a first memory unit (27) for storing a predefinable store of vectors ($y_{is}$(k) of sample values and a second memory unit (28) for storing weighting factors (ig).

**6.** A transmission system as claimed in one of the Claims 1 to 5, **characterized in that** the receiver (20) comprises an error detection device (29) for detecting disturbed codewords (CW') and for driving the first and second switching means (26, 30, respectively).

**7.** A transmission system as claimed in one of the Claims 1 to 6, **characterized in that** not only a delay parameter (kp) featuring the time shift but also a weighting factor (b) is used for generating the substitute values ($s_e$(k)).

**8.** A transmission system as claimed in one of the Claims 1 to 7, **characterized in that** the receiver comprises a postfilter (25) according to ITU-T Rec. G.728 inserted downstream of the decoder (24) and **in that** for deriving the delay parameter (kp) and the weighting factor (b) values are available determined by the postfilter (25).

**9.** A transmission system as claimed in one of the Claims 1 to 8, **characterized in that** the current speech spectrum is provided for weighting the error spectrum developing in the output signal (s'(k)) of the postfilter (25).

**10.** A radio arrangement (1,2), more particularly a base station or a mobile station for a digital transmission system, more particularly a mobile radio transmission system comprising a receiver (20) for receiving transmitted codewords (CW') which are derived from a digital signal (s(k)), the receiver (20) including a decoder (24) with a prediction filter (22) to produce an estimated digital signal (s(k)), **characterized in that** the decoder (24) comprises switching means (26) for switching off an input signal (et(k)) of the prediction filter (22) when a disturbed codeword (CW') is received and **in that** substitute values $s_e$(k) formed from previous values of the estimated digital signal (s(k)) are used instead of the estimated digital signal when the input signal (et(k) of the prediction filter (22) is switched off.

11. A receiver (20) for a digital transmission system, especially a mobile radio system for receiving transmitted codewords (CW') which are derived from a digital signal (s(k)), the receiver (20) comprising a decoder (24) with a prediction filter (22) for determining an estimated digital signal (s(k)),

**characterized in that** the decoder (24) comprises switching means (26) for switching off an input signal (et(k)) of the prediction filter (22) when a disturbed codeword (CW') is received and **in that** substitute values $s_e(k)$ formed from previous values of the estimated digital signal (s(k)) are used instead of the estimated digital signal when the input signal (et(k) of the prediction filter (22) is switched off.

**Revendications**

1. Système de transmission numérique, en particulier système radiomobile avec au moins un émetteur (10) pour émettre des mots de code (CW) qui sont dérivés d'un signal numérique (s(k)) et avec au moins un récepteur (20) pour recevoir des mots de code (CW') à recevoir, le récepteur (20) présentant un décodeur (24) avec un filtre de prédiction (22) excité par un signal d'entrée (et(k)) pour la détermination d'un signal numérique estimé ($s_R(k)$), **caractérisé en ce que** le décodeur (24) présente des premiers moyens de commutation (26) pour désactiver le signal d'entrée (et(k)) du filtre de prédiction (22) en cas de réception d'un mot de code perturbé (CW') et des deuxièmes moyens de commutation (31) pour l'activation de valeurs de remplacement ($s_e(k)$) formées à partir de valeurs antérieures dans le temps du signal numérique estimé ($s_R(k)$) pour le signal numérique estimé ($s_R(k)$) en cas de signal d'entrée désactivé (et(k)).

2. Système de transmission selon la revendication 1, **caractérisé en ce que** le système de transmission est prévu pour la transmission de mots de code (CW) selon le procédé LD-CELP (Low-Delay Code-Excited Linear Predictive).

3. Système de transmission selon l'une des revendications 1 à 2, **caractérisé en ce que** le récepteur présente un post-filtre (25) monté en aval du décodeur (24).

4. Système de transmission selon l'une des revendications 1 à 3, **caractérisé en ce que** le filtre de prédiction (22) est conçu comme un filtre de synthèse adaptatif et qu'un signal d'excitation est prévu comme signal d'entrée (et (k)) du filtre de synthèse (22), un dispositif de mémoire (21) étant prévu pour l'enregistrement de mots de code de comparaison en vue de la production du signal d'excitation (et(k)).

5. Système de transmission selon l'une des revendications 1 à 4, **caractérisé en ce que** le dispositif de mémoire (21) est formé à partir d'une première unité de mémoire (27) pour l'enregistrement d'une réserve à déterminer préalablement de vecteurs ($y_{15}(k)$) de valeurs de balayage et d'une deuxième unité de mémoire (28) pour l'enregistrement de facteurs de pondération (ig).

6. Système de transmission selon l'une des revendications 1 à 5, **caractérisé en ce que** le récepteur (20) présente un dispositif de reconnaissance des erreurs (29) pour la détection de mots de code (CW') perturbés et pour l'excitation des premier (26) et deuxième (30) moyens de commutation.

7. Système de transmission selon l'une des revendications 1 à 6, **caractérisé en ce qu'**un paramètre de retardement (kp) caractérisant le décalage temporel ainsi qu'un facteur de pondération (b) sont prévus pour la production des valeurs de remplacement ($S_e(k)$).

8. Système de transmission selon l'une des revendications 1 à 7, **caractérisé en ce que** le récepteur présente un post-filtre (25) monté en aval du décodeur (24) selon ITU-T Rec. G.728 et que les valeurs déterminées pour la dérivation du paramètre de retardement (kp) et du facteur de pondération (b) par le post-filtre (25) sont prévues.

9. Système de transmission selon l'une des revendications 1 à 8, **caractérisé en ce que** le spectre actuel de la parole est prévu pour la pondération du spectre d'erreurs formé dans le signal de sortie (s'(k)) du post-filtre (25).

10. Dispositif radio (1,2) en particulier station fixe ou mobile pour un système de transmission numérique, en particulier un système de radiotransmission mobile, avec un récepteur (20) pour la réception de mots de code (CW') transmis qui sont dérivés d'un signal numérique (s(k)), le récepteur (20) présentant un décodeur (24) avec un filtre de prédiction (22) pour la détermination d'un signal numérique (s(k)) estimé, **caractérisé en ce que** le décodeur (24) présente des moyens de commutation (26) qui sont prévus pour la désactivation d'un signal d'entrée (et(k)) du filtre de prédiction (22) à la réception d'un mot de code (CW') perturbé et qu'en cas de signal d'entrée (et(k)) désactivé du filtre de prédiction (22) pour le signal numérique estimé, des valeurs de remplacement ($s_e$(k)) sous la forme de valeurs antérieures dans le temps du signal numérique estimé (s(k)) sont prévues.

11. Récepteur (20) pour un système de transmission numérique, en particulier un système radiomobile pour la réception de mots de code (CW') transmis qui sont dérivés d'un signal numérique (s(k)), le récepteur (20) présentant un décodeur (24) avec un filtre de prédiction (22) pour la détermination d'un signal numérique estimé (s(k)), **caractérisé en ce que** le décodeur (24) présente des moyens de commutation (26) qui sont prévus pour la désactivation d'un signal d'entrée (et(k)) du filtre de prédiction (22) à la réception d'un mot de code (CW') perturbé et qu'en cas de signal d'entrée (et(k)) désactivé du filtre de prédiction (22) pour le signal numérique estimé, des valeurs de remplacement ($S_c$(k)) sont prévues sous la forme de valeurs antérieures dans le temps du signal numérique estimé (s(k)).

EP 0 746 924 B1

FIG. 1

FIG. 2

10

FIG. 3

FIG. 4

11

FIG. 5